# EUROPEAN PATENT APPLICATION

(11) **EP 4 224 395 A1**
(43) Date of publication of application: **09.08.2023**
(21) Application number: 21886912.1
(22) Date of filing: 29.10.2021
(51) Int. Cl.: G06Q 20/32, G06Q 20/40, G06Q 20/14

(54) **PAYMENT METHOD AND DEVICE USING ULTRA-WIDEBAND COMMUNICATION**

(30) Priority: 30.10.2020 KR 20200142927
(71) Applicant: Samsung Electronics Co., Ltd., Suwon-si, Gyeonggi-do 16677 (KR)
(72) Inventor: CHO, Sungkyu, Suwon-si, Gyeonggi-do 16677 (KR); YOON, Kangjin, Suwon-si, Gyeonggi-do 16677 (KR); HAN, Sehee, Suwon-si, Gyeonggi-do 16677 (KR); RYU, Youngsun, Suwon-si, Gyeonggi-do 16677 (KR)
(74) Representative: HGF
(86) International application number: PCT/KR2021/015481
(87) International publication number: WO 2022/092918

(57) **Abstract**

Disclosed in the present disclosure are a method and device for providing a payment service using a UWB communication. The method of the present disclosure includes the following operations: transmitting an initiation message for initiating a UWB ranging; receiving, from at least one user terminal, a response message for the initiation message; transmitting a transaction information message for payment to a first user device selected on the basis of the response message; and receiving a payment information message corresponding to the transaction information message from the first user device.

## Description

### [Technical Field]

The disclosure relates to a payment method and, more specifically, to a payment method and device using UWB.

### [Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through conversion or integration of conventional information technology (IT) techniques and various industries.

As wireless communication systems evolve to provide various services, a need arises for a method for effectively providing such services. For example, it is possible to use a ranging technique for measuring the distance between electronic devices using ultra-wide band (UWB). UWB is a wireless communication technology that uses a very wide frequency band of several GHz or more in a baseband without using a wireless carrier.

### [Detailed Description of the Invention]

### [Technical Problem]

The disclosure provides a method for processing offline payment at a remote location by UWB. Further, the disclosure provides a payment method that maintains low payment complexity and high security while using UWB.

### [Technical Solution]

According to an aspect of the disclosure, a method by a payment device providing a payment service using UWB communication may comprise transmitting an initiation message for initiating UWB ranging, receiving a response message for the initiation message from at least one user device, transmitting a transaction information message for payment to a first user device selected based on the response message, and receiving a payment information message corresponding to the transaction information message from the first user device.

As an embodiment, the method may further comprise determining position information about the at least one user terminal based on the response message, generating a user list for the at least one user terminal based on the position information, and selecting the first user device having a payment intent based on the user list.

According to another aspect of the disclosure, a method by a user device providing a payment service using UWB communication may comprise receiving an initiation message for initiating UWB ranging from a payment device, transmitting a response message to the initiation message to the payment device, receiving a transaction information message for payment from the payment device, and transmitting a payment information message corresponding to the transaction information message to the payment device.

As an embodiment, the method may further comprise performing authentication for payment based on the transaction information message.

According to another aspect of the disclosure, a payment device providing a payment service using UWB communication may comprise a transceiver and a controller connected to the transceiver. The controller may be configured to transmit an initiation message for initiating UWB ranging, receive a response message to the initiation message from at least one user device, transmit a transaction information message for payment to a first user device selected based on the response message, and receive a payment information message corresponding to the transaction information message from the first user device.

According to another aspect of the disclosure, a user device providing a payment service using UWB communication may comprise a transceiver and a controller connected to the transceiver. The controller may be configured to receive an initiation message for initiating UWB ranging from a payment device, transmit a response message for the initiation message to the payment device, receive a transaction information message for payment from the payment device, and transmit a payment information message corresponding to the transaction information message to the payment device.

As an embodiment, the initiation message may include information for identifying the payment device or a store associated with the payment device and information related to a contention window for the UWB ranging in a contention-based ranging mode.

As an embodiment, the information related to the contention window may include flag information indicating whether contention window size information indicating duration of the contention window is present.

As an embodiment, when the flag information is set to a first value, the contention window size information may not be present in the initiation message, and when the flag information is set to a second value, the contention window size information may be present in the initiation message.

As an embodiment, the response message may include information for identifying a user device transmitting the response message.

As an embodiment, the transaction information message may include transaction information for the payment or link information for obtaining the transaction information and include information about at least one of a transaction amount, a merchant name, a merchant ID, an order number, a payment protocol, a shipping address, an address for a payment sheet, an allowed card brand, or recurring.

As an embodiment, the transaction information message may include a first random number for encrypting the transaction information message and first signing information generated based on the transaction information and the first random number.

As an embodiment, the payment information message may include payment information and link information for obtaining the payment information. The payment information may include information about at least one of a card number, an expiration date, an authentication service (auth service), a purchased total currency, an amount, billing information (info), or a token.

As an embodiment, the payment information message may further include a second random number for encrypting the payment information message and second signing information generated based on the payment information, the first random number, and the second random number.

As an embodiment, a scrambled timestamp sequence (STS) configuration for the UWB communication may correspond to a static STS configuration. A value of a static STS for the static STS configuration may be generated based on a value of a vendor ID.

As an embodiment, a ranging frame configuration for the UWB communication may correspond to an STS packet (SP) 1 configuration. A ranging mode (scheduled mode) of the UWB ranging may correspond to a contention-based ranging mode.

According to an aspect of the disclosure, a method by a payment device processing payment with a user device using UWB communication may comprise transmitting an initiation message for UWB ranging, receiving a response message to the initiation message from at least one user terminal, transmitting a transaction information message for payment to a selected first user device, and receiving a payment information message corresponding to the transaction information message from the first user device.

As an embodiment, the method may further comprise determining position information about the at least one user terminal based on the response message to the initiation message, generating a user list for the at least one user terminal based on the position information, and selecting the first user device based on the user list.

According to another aspect of the disclosure, a method by a user device processing payment with a payment device using UWB communication may comprise receiving an initiation message for UWB ranging from a payment device, transmitting a response message for the initiation message to the payment device, receiving a transaction information message for payment from the payment device, and transmitting a payment information message corresponding to the transaction information message to the payment device.

According to another aspect of the disclosure, a payment device processing payment with a user device using UWB communication may comprise a transceiver and a controller connected to the transceiver. The controller may be configured to transmit an initiation message for UWB ranging, receive a response message for the initiation message from at least one user terminal, transmit a transaction information message for payment to a selected first user device, and receive a payment information message corresponding to the transaction information message from the first user device.

According to another aspect of the disclosure, a user device processing payment with a payment device using UWB communication may comprise a transceiver and a controller connected to the transceiver. The controller may be configured to receive an initiation message for UWB ranging from a payment device, transmit a response message to the initiation message to the payment device, receive a transaction information message for payment from the payment device, and transmit a payment information message corresponding to the transaction information message to the payment device.

As an embodiment, the initiation message may include information for identifying a store associated with the payment device and information related to a contention window associated with the UWB ranging.

As an embodiment, the information related to the contention window may include flag information indicating whether contention window size information indicating a size of the contention window is present.

As an embodiment, when the flag information is set to a first value, the contention window size information may not be present in the initiation message, and when the flag information is set to a second value, the contention window size information may be present in the initiation message.

As an embodiment, information for identifying a user device transmitting the response message may be included.

As an embodiment, the transaction information message may include transaction information for the payment or link information for obtaining the transaction information and include information about at least one of a transaction amount, a merchant name, a merchant ID, an order number, a payment protocol, a shipping address, an address for a payment sheet, an allowed card brand, or recurring.

As an embodiment, the payment information message may include payment information and link information for obtaining the payment information. The payment information may include, e.g., information about at least one of a card number, an expiration date, an authentication service (auth service), a purchased total currency, an amount, billing information (info), or a token.

### [Advantageous Effects]

According to the payment method using UWB of the disclosure, it is possible to process offline payment at a remote distance and maintain low payment complexity and high security.

### [Brief Description of the Drawings]

FIG. 1 illustrates an example payment system;
FIG. 2 illustrates an example of a payment system using UWB according to an embodiment of the disclosure;
FIG. 3 illustrates another example of a payment system using UWB according to an embodiment of the disclosure;
FIG. 4 illustrates a payment method using UWB according to an embodiment of the disclosure;
FIG. 5 illustrates an example payment scenario using the payment method using UWB of FIG. 4;
FIG. 6 illustrates a payment method using UWB according to another embodiment of the disclosure;
FIG. 7 illustrates a payment method using UWB according to another embodiment of the disclosure;
FIG. 8 illustrates a method for processing payment using UWB by a payment device according to an embodiment of the disclosure;
FIG. 9 illustrates a method for processing payment using UWB by a user device according to an embodiment of the disclosure;
FIG. 10 is a view illustrating a structure of a payment device according to an embodiment of the disclosure;
FIG. 11 is a view illustrating a structure of a user device according to an embodiment of the disclosure; and
FIG. 12 illustrates an example architecture of a payment system using UWB according to an embodiment of the disclosure.

### [Mode for Carrying out the Invention]

Hereinafter, embodiments of the disclosure are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement execution examples, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, the term "unit" is not limited as meaning a software or hardware element. A 'unit' may be configured in a storage medium that may be addressed or may be configured to reproduce one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. A function provided in an element or a 'unit' may be combined with additional elements or may be split into sub elements or sub units. Further, an element or a 'unit' may be implemented to reproduce one or more CPUs in a device or a security multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the operational principle of the disclosure is described below with reference to the accompanying drawings. When determined to make the subject matter of the present disclosure unclear, the detailed of the known functions or configurations may be skipped. The terms as used herein are defined considering the functions in the present disclosure and may be replaced with other terms according to the intention or practice of the user or operator. Therefore, the terms should be defined based on the overall disclosure.

The terminology used herein is provided for a better understanding of the disclosure, and changes may be made thereto without departing from the technical spirit of the disclosure.

"Application dedicated file (ADF)" may be, e.g., a data structure in an application data structure that may host an application or application specific data.

"Application protocol data unit (APDU)" may be a command and a response used when communicating with the application data structure in the UWB device.

"Application specific data" may be, e.g., a file structure having a root level and an application level including UWB controllee information and UWB session data required for a UWB session.

"Controller" may be a ranging device that defines and controls ranging control messages (RCM) (or control messages).

"Controllee" may be a ranging device using a ranging parameter in the RCM (or control message) received from the controller.

Unlike "static STS," "dynamic scrambled timestamp sequence (STS) mode" may be an operation mode in which the STS is not repeated during a ranging session. In this mode, the STS may be managed by the ranging device, and the ranging session key that generates STS may be managed by a secure component.

"Applet" may be, e.g., an application executed on the secure component including UWB parameters and service data. In the disclosure, the applet may be a FiRa applet defined by the specifications of the FiRa consortium (hereinafter referred to as the FiRa/FiRa standard).

"Ranging device" may be a device capable of performing UWB ranging. In the disclosure, the Ranging Device may be an Enhanced Ranging Device (ERDEV) defined in IEEE 802.15.4z or a FiRa Device defined by FiRa. The Ranging Device may be referred to as a UWB device.

"UWB-enabled Application" may be an application for UWB service. For example, the UWB-enabled Application may be an application using a Framework API for configuring an OOB Connector, a Secure Service, and/or a UWB service for a UWB session. In this disclosure, "UWB-enabled Application" may be abbreviated as an application or a UWB application. UWB-enabled Application may be a FiRa-enabled Application defined by FiRa.

"Framework" may be a component that provides access to Profiles, individual-UWB configuration and/or notifications. "Framework" may be, e.g., a collection of logical software components including Profile Manager, OOB Connector, Secure Service, and/or UWB service. In the disclosure, the Framework may be a FiRa Framework defined by FiRa.

"OOB Connector" may be a software component for establishing an out-of-band (OOB) connection (e.g., BLE connection) between Ranging Devices. In the disclosure, the OOB Connector may be a FiRa OOB Connector defined by FiRa.

"Profile" may be a previously defined set of UWB and OOB configuration parameters. In the disclosure, Profile may be a FiRa Profile defined by FiRa.

"Profile Manager" may be a software component that implements a profile available on the Ranging Device. In the disclosure, the Profile Manager may be a FiRa Profile Manager defined by FiRa.

"Service" may be an implementation of a use case that provides a service to an end-user.

"Smart Ranging Device" may be a ranging device that may implement an optional Framework API. In the disclosure, the Smart Ranging Device may be a FiRa Smart Device defined by FiRa.

"Global Dedicated File (GDF)" may be a root level of application specific data including data required to establish a USB session.

"Framework API" may be an API used by a UWB-enabled Application to communicate with the Framework.

"Initiator" may be a Ranging Device that initiates a ranging exchange.

"Object Identifier (OID)" may be an identifier of the ADF in the application data structure.

"Out-Of-Band (OOB)" may be data communication that does not use UWB as an underlying wireless technology.

"Ranging Data Set (RDS)" may be data (e.g., UWB session key, session ID, etc.) required to establish a UWB session when it is needed to protect confidentiality, authenticity and integrity.

"Responder" may be a ranging device that responds to the Initiator in a ranging exchange.

"STS" may be a ciphered sequence for increasing the integrity and accuracy of ranging measurement timestamps. The STS may be generated from the ranging session key.

"Secure channel" may be a data channel that prevents overhearing and tampering.

"Secure Component" may be an entity (e.g., SE or TEE) having a defined security level that interfaces with UWBS for the purpose of providing RDS to UWBS, e.g., when dynamic STS is used.

"Secure element (SE)" may be a tamper-resistant secure hardware component that may be used as a Secure Component in the Ranging Device.

"Secure ranging" may be ranging based on STS generated through a strong encryption operation.

"Secure Service" may be a software component for interfacing with a Secure Component, such as a Secure Element or Trusted Execution Environment (TEE).

"Service Applet" may be an applet on a Secure Component that handles service specific transactions.

"Service data" may be data defined by a service provider that needs to be transferred between two ranging devices to implement a service.

"Service provider" may be an entity that defines and provides hardware and software required to provide a specific service to an end-user.

"Static STS mode" is an operation mode in which STS is repeated during a session, and does not need to be managed by the Secure Component.

"Secure UWB Service (SUS) Applet" may be an applet on the SE that communicates with the applet to retrieve data needed to enable secure UWB sessions with other ranging devices. The SUS Applet may transfer corresponding data (information) to the UWBS.

"UWB Service" may be a software component that provides access to the UWBS.

"UWB Session" may be a period from when the Controller and the Controllee start communication through UWB until the communication stops. A UWB Session may include ranging, data transfer, or both ranging and data transfer.

"UWB Session ID" may be an ID (e.g., a 32-bit integer) that identifies the UWB Session, shared between the controller and the controller.

"UWB session key" may be a key used to protect the UWB Session. The UWB Session Key may be used to generate an STS mapped with a UWB Session (or UWB Session ID). In this disclosure, the UWB session key may be a UWB ranging session key (URSK), and may be abbreviated as a session key.

"UWB subsystem (UWBS)" may be a hardware component implementing the UWB PHY and MAC layers specifications. UWBS may have an interface to Framework and an interface to Secure Component to search for RDS. In this disclosure, the UWB PHY and MAC specifications may be, e.g., FiRa PHY and FiRa MAC specifications defined by FiRa referring to IEEE 802.15.4/4z.

Hereinafter, embodiments of the present invention are described in detail with reference to the accompanying drawings. Further, although a payment system using UWB is described in connection with embodiments of the present invention, as an example, embodiments of the present invention may also apply to other payment systems with similar technical background or features. For example, a payment system using Bluetooth may be included therein. Further, embodiments of the present invention may be modified in such a range as not to significantly depart from the scope of the present invention under the determination by one of ordinary skill in the art and such modifications may be applicable to other communication systems.

When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

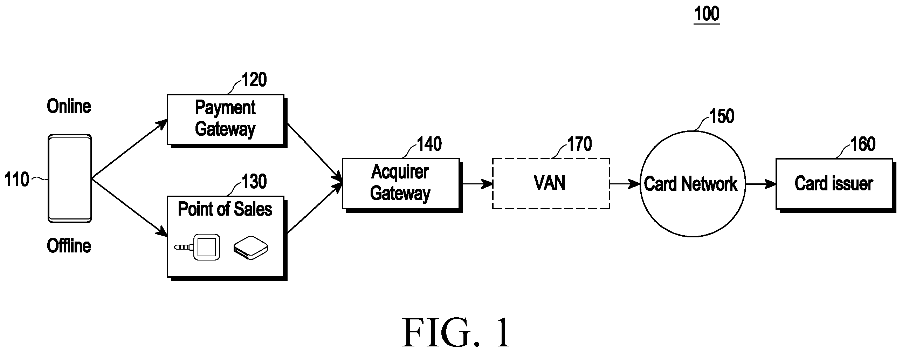

FIG. 1 illustrates an example payment system.

The payment system 100 of FIG. 1 may be, e.g., a payment system using a payment scheme that requires short-range contact, such as a near field communication (NFC) payment scheme, as an offline payment scheme.

Referring to FIG. 1, the payment system 100 may include a user device 110, a payment gateway 120 for online payment, a payment device (e.g., point of sales (POS) terminal) 130 for offline payment, an acquirer device 140, a card network 150, and/or a card issuer device 160. As an embodiment, the payment system 100 may further include a value-added network 170 between the acquirer device 140 and the card network 150, as an optional component.

The payment system 100 may use an online payment scheme and an offline payment scheme as a payment scheme. The payment system 100 may perform online payment by a predetermined online payment scheme through the payment gateway 120. Further, the payment system 100 may perform offline payment using a predetermined offline payment scheme (e.g., NFC payment scheme) through the payment device 130, such as a POS terminal.

In the example of FIG. 1, the acquirer device 140 may serve to acquire slips and process payment on behalf of affiliated stores. The card issuer device 160 is a device of an issuer (e.g., a bank or a card company) that issues a card, and may perform processing operations for payment by communicating with the acquirer device 140 through the card network 150.

As in the payment system 100 of FIG. 1, when offline payment is performed by a payment scheme, such as an NFC payment scheme that requires short-range contact, a technical restriction that short-range contact (e.g., tagging within 10 cm) is required occurs. Further, a service restriction may also occur in which the user should transfer the user device (e.g., a smart phone) to the store owner for payment.

Accordingly, a need arises for a new type of offline payment scheme capable of performing offline payment without tagging or transferring a phone to the store owner by enabling remote communication (e.g., communication within a distance of several meters) relative to payment schemes requiring short-range contact. Further, this new type of offline payment scheme needs to address the arising security and payment complexity issues by performing offline payment using remote communication. Further, the new type of offline payment scheme needs to be compatible with the legacy payment system to affect only the frontend operation (e.g., operation between payment device and user device) of the payment device without affecting the backend operation of the payment device in comparison to the legacy offline payment scheme using the NFC payment scheme.

The disclosure assumes that the new type of offline payment scheme is an offline payment scheme using UWB communication and various embodiments thereof are described. However, it will be apparent to one of ordinary skill in the art that various embodiments of the disclosure are not limited as applying only to the offline payment scheme using UWB communication but, according to an embodiment, are also applicable to offline payment schemes using a communication scheme (e.g., Bluetooth) having similar functions or characteristics to those of UWB communication.

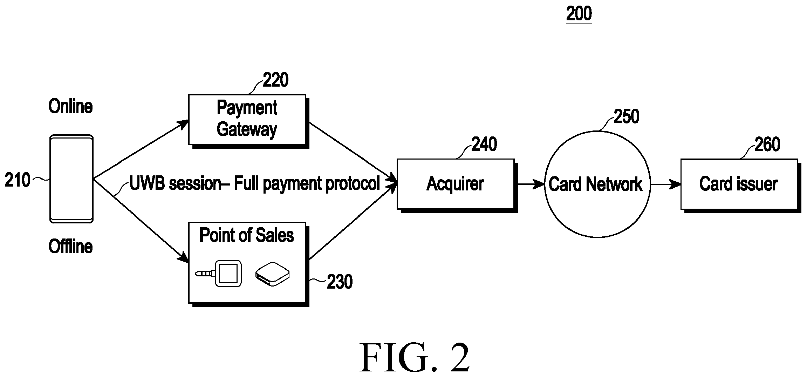

FIG. 2 illustrates an example of a payment system using UWB according to an embodiment of the disclosure.

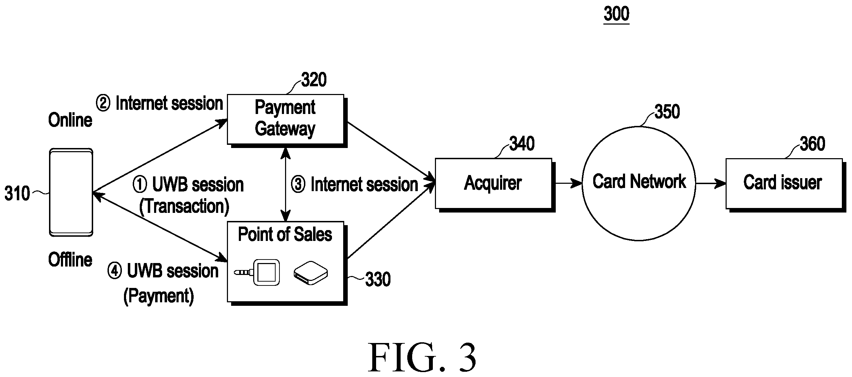

The payment system 200 of FIG. 2 may be a payment system using a payment protocol (payment service/payment application) capable of performing offline payment using only communication in a UWB session between UWB communication-capable user device and payment device, for example. The payment protocol of the embodiment of FIG. 2 may be referred to as a first payment protocol, a UWB protocol, a UWB payment protocol, or a full payment protocol. The payment protocol of the embodiment of FIG. 2 is compared with the payment protocol of the embodiment of FIG. 3 which uses communication in the Internet period between the user device and the payment gateway as well as communication in the UWB session between the user device and the payment device for offline payment.

Referring to FIG. 2, the payment system 200 may include a user device 210, a payment gateway 220 for online payment, a payment device (e.g., UWB point of sales (POS) terminal) 230 for offline payment, an acquirer device 240, a card network 250, and/or a card issuer device 260. In the embodiment of FIG. 2, operations and roles for payment of the acquirer device 240, the card network 250 and the card issuer device 260 may be the same as those described above through the embodiment of FIG. 1.

The payment system 200 may perform online payment by a predetermined online payment scheme through the payment gateway 220. The online payment scheme of the embodiment of FIG. 2 may be the same as, e.g., the online payment scheme of the embodiment of FIG. 1.

Further, the payment system 200 may perform offline payment using a payment protocol (e.g., full payment protocol) predetermined through the payment device 230, such as a UWB POS terminal. For example, the payment system 200 may perform a UWB ranging procedure, a transaction procedure, and/or a payment procedure through a UWB session. The UWB ranging procedure of the disclosure may follow, e.g., the ranging procedure specified in the "IEEE 802.15.4/z standard" and "UWB technical standard of FiRa consortium". For example, the UWB ranging procedure may be a procedure following, e.g., a single side (SS)-two way ranging (TWR) scheme or a double side (DS) scheme specified in the "IEEE 802.15.4/z standard" and "UWB technical standard of FiRa consortium")

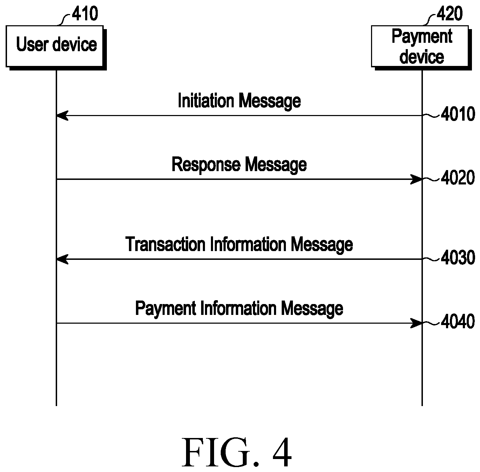

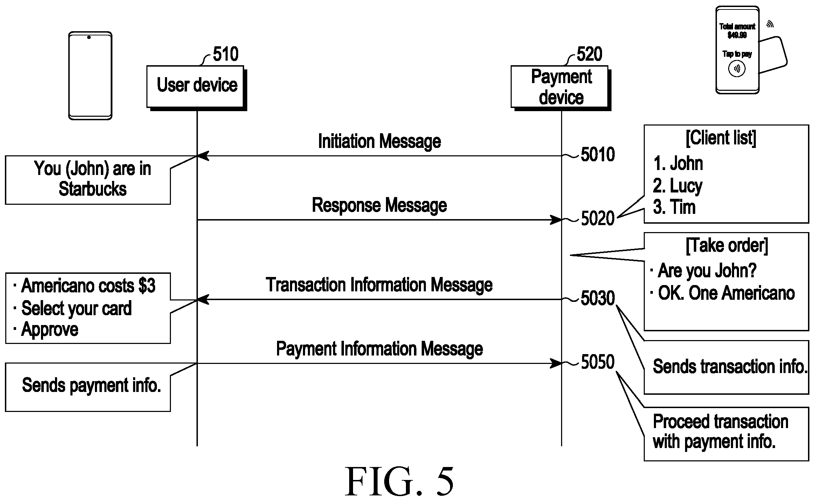

For offline payment using UWB, the payment device 230 should be able to accurately identify the location and distance of the user device (user) 210 through UWB ranging, and the user device (user) 210 should be able to accurately identify and authenticate the payment device 230. Further, payment complexity should be minimized through a scheme that accurately identifies the user's intention to pay. Further, user information, such as card information, should not be exposed during the payment process, and superior security is required. Various embodiments for meeting these requirements are described below with reference to each drawing. Various embodiments using the payment system and payment protocol of FIG. 2 are described below with reference to, e.g., FIGS. 4 and 5.

FIG. 3 illustrates another example of a payment system using UWB according to an embodiment of the disclosure.

Unlike, e.g., the payment protocol of the embodiment of FIG. 2, the payment system 300 of FIG. 3 may be a payment system that uses a payment protocol (payment service/payment application) using communication in the Internet session between user device and payment gateway, as well as communication in the UWB session between user device and payment device for offline payment.

The payment protocol of the embodiment of FIG. 3 transfers only minimum information required for offline payment through the UWB session and may thus simplify communication in the UWB communication for offline payment as compared with when the payment protocol of the embodiment of FIG. 2 is used. Further, since the payment protocol of the embodiment of FIG. 3 is used, online payment may easily be performed through the information transferred through the UWB session, extending payment coverage. The payment protocol of the embodiment of FIG. 3 may be referred to as a second payment protocol or a simplified payment protocol.

Referring to FIG. 3, the payment system 300 may include a user device 310, a payment gateway 320 for online payment, a payment device (e.g., UWB point of sales (POS) terminal) 330 for offline payment, an acquirer device 340, a card network 350, and/or a card issuer device 360. In the embodiment of FIG. 3, operations and roles for payment of the acquirer device 340, the card network 350 and the card issuer device 360 may be the same as those described above through the embodiment of FIG. 1.

The payment system 300 may perform online payment by a predetermined online payment scheme through the payment gateway 320. The online payment scheme of the embodiment of FIG. 3 may be the same as, e.g., the online payment scheme of the embodiment of FIG. 1. Or, the online payment scheme of the embodiment of FIG. 3 may be a new type of online payment scheme further using the information transferred through the UWB session. Thus, it is possible to easily perform offline payment in the payment system 300.

Further, the payment system 300 may perform offline payment using a payment protocol (e.g., simplified payment protocol) predetermined through the payment device 330, such as a UWB POS terminal. For example, the payment system 300 may perform a simplified transaction procedure and/or simplified payment procedure, as compared with the embodiment of FIG. 2, through the UWB session, using the information transferred through at least one Internet session (e.g., Internet session between the user device 310 and the payment gateway 320 and/or Internet session between the payment gateway 320 and the payment device 330). Thus, it is possible to reduce payment complexity for offline payment by the payment system 300.

Use of the payment scheme as in the embodiment of FIG. 3 may provide a wide range of choices for payment devices and payment gateways considering fees.

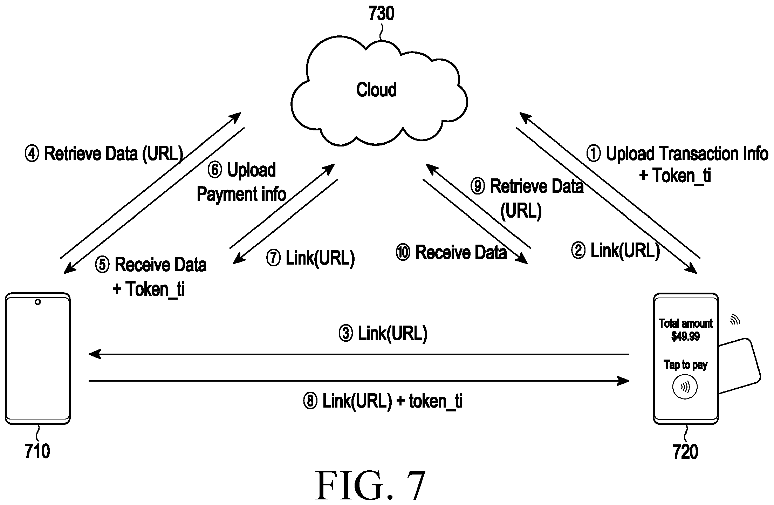

Various embodiments using the payment system and payment protocol of FIG. 3 are described below with reference to, e.g., FIGS. 4 and 7.

FIG. 4 illustrates a payment method using UWB according to an embodiment of the disclosure.

Specifically, the embodiment of FIG. 4 illustrates an example of an offline payment method using UWB.

In the embodiment of FIG. 4, the user device 410 and the payment device 420 correspond to devices capable of UWB communication. For example, the user device and payment device may be devices implemented according to a protocol stack including a MAC layer and a PHY layer specified by "IEEE 802.15.4 standard" and "FiRa consortium UWB technical standard". For example, the user device 410 and/or the payment device 420 may be a UWB device (e.g., an enhanced ranging device (ERDEV) defined in IEEE 802.15.4z or FiRa device defined in FiRa) that provides a payment service (application) through UWB communication.

Further, in the embodiment of FIG. 4, among scrambled timestamp sequence (STS) generation modes (methods) for security, a static STS generation mode (method), not a dynamic STS generation mode (method), may be used. In other words, the STS configuration (UWB STS configuration) for UWB communication (or UWB session) in the embodiment of FIG. 4 may correspond to the static STS configuration. In this case, an STS generated based on the VENDOR_ID field and the STATIC_STS_CONFIG field configured by the UWB command interface (UCI) for a specific payment application (service/protocol) (e.g., Samsung Pay) may be used for UWB communication (UWB ranging). As an embodiment, the VENDOR_ID field may include a vendor identifier. The STATIC_STS_CONFIG field may include a value for static STS configuration. In this disclosure, the STATIC_STS_CONFIG field may be referred to as a STATIC_STS_IV field. Such an STS generation procedure and procedures related thereto may be performed with reference to procedures specified in, e.g., "IEEE 802.15.4/z standard" and "UWB technical standard of FiRa consortium".

The procedure of the embodiment of FIG. 4 may be a procedure performed when a payment application for payment using UWB is started on the user device 410.

### <Operation 4010 and initiation message>

Referring to FIG. 4, the payment device 420 may transmit an initiation message for UWB ranging (4010). As an embodiment, the payment device 420 may broadcast an initiation message.

As an embodiment, the initiation message may include information for identifying the store associated with the payment device (e.g., name of the store) and/or information related to a contention window associated with UWB ranging (e.g., contention window size and/or information indicating the presence of the contention window).

As an embodiment, the initiation message may be a ranging initiation message (UWB message/RFRAME) specified in the "IEEE 802.15.4z standard" and the "UWB MAC standard of the FiRa consortium". For example, the initiation message may be a ranging initiation message (SP1 RFRAME) configured when a ranging frame (RFRAME) configuration is set as STS packet configuration structure 1 (SP1). In this case, the initiation message may include at least one piece of information used for UWB ranging (e.g., a transmission timestamp indicating the transmission time of the initiation message). In the disclosure, the STS packet configuration structure 1 (SP1) configuration may have a configuration in which in the STS packet (PHY packet) transferring the RFRAME (or UWB message), the STS (or STS field) follows the start-of-frame delimiter (SFD) field. For a description of the SP1 configuration, reference may be made to the "IEEE 802.15.4z standard" and "FiRa consortium standard".

As an embodiment, the initiation message (SP1 initiation message/SP1 ranging initiation message) having the SP1 configuration may include a MAC header, a MAC payload including at least one payload information element (IE), and/or a MAC footer,

As an embodiment, the initiation message may include a header IE and/or a payload IE. Table 1 and Table 2 below show an example of the payload IE of the initiation message.

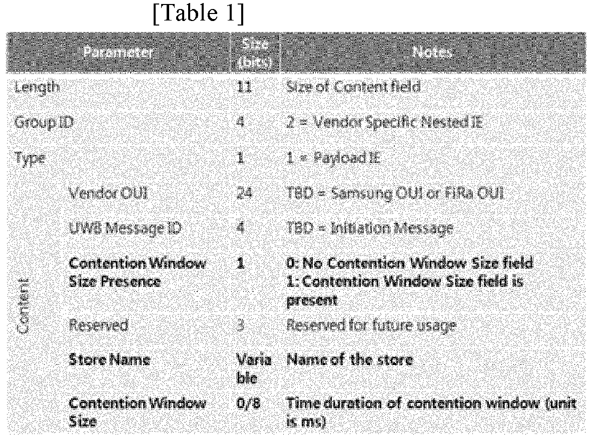

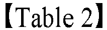

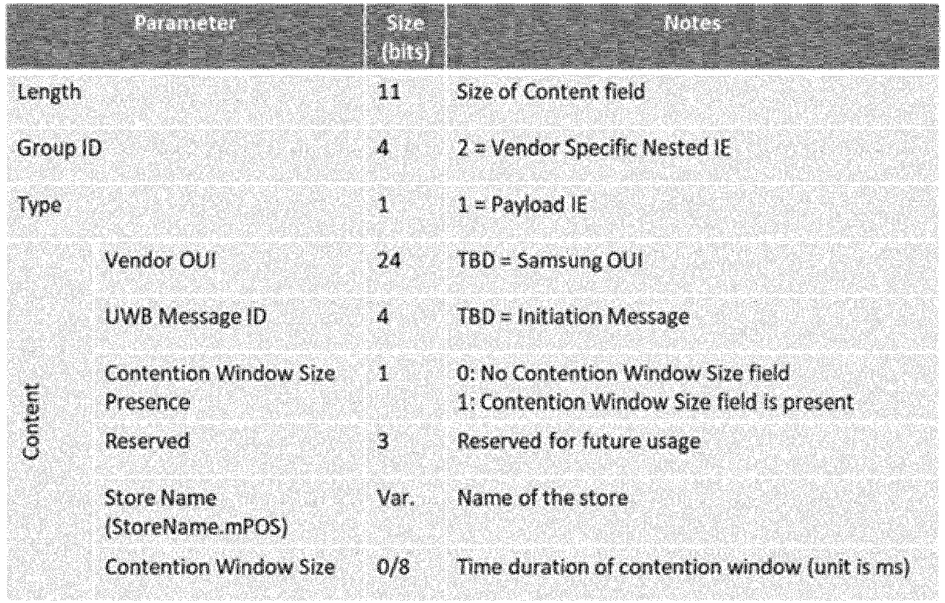

Referring to Tables 1 and 2, the initiation message may include a payload IE including a length field (information), a group ID field (information), a type field (information), and/or a content field (information). As an embodiment, the content field may include a vendor organizationally unique identifier (OUI) field, a UWB message ID field, a contention window size presence field, a store name field, and/or a contention window size field. Each field is described below. As in Table 2, the store name field may be referred to as StoreName.mPOS.

The length field indicates the size (length) of the content field.

The group ID field indicates the type of the corresponding IE. For example, in the case of the initiation message, the group ID field may be set to a value (e.g., 2) indicating the vendor specific nested IE.

The type field indicates the type of the corresponding IE. For example, in the type field, the type of IE may be set to a value indicating the payload IE (e.g., 1).

The vendor OUI field indicates the vendor's OUI. The vendor OUI field may be, e.g., a field including a unique value of the vendor defining a message to ensure the uniqueness of the defined messages based on the IEEE standard. For example, in the disclosure, the vendor OUI field may be set to a value indicating Samsung OUI and/or FiRa OUI.

The UWB message ID field may be a field indicating which message the corresponding payload IE is. For example, in the case of the initiation message, the UWB message ID field may be set to a value indicating the initiation message.

The contention window size presence field indicates whether the contention window size field exists. For example, when the contention window size field is not present in the content field (or initiation message), the contention window size field may be set to a first value (e.g., 0). Alternatively, when the contention window size field is present in the content field (or initiation message), the contention window size field may be set to a second value (e.g., 1). In this disclosure, the contention window size presence field may be referred to as flag information.

The shop name field indicates the name of the shop. For example, the store name field may be set to a value indicating the name of the store associated with the payment device 420 (e.g., a store using the payment device 420).

The contention window size field indicates the time duration of the contention window. For example, the contention window size field may indicate the duration of the contention window in the unit of ms. As an embodiment, the contention window size field may be included in the initiation message when the ranging mode of UWB ranging is a contention-based ranging mode. When the contention window size field is included in the initiation message, each user device 410 may perform contention-based ranging by transmitting a response message within the duration of the contention window indicated by the contention window size field.

### <Operation 4020 and response message>

The user device 410 may transmit a response message to the initiation message to the payment device 420 (4020). As an embodiment, each user device 410 receiving the initiation message may unicast a response message to the payment device 420.

As an embodiment, when the initiation message includes the competition window size field, the user device 410 may transmit a response message to the payment device within the duration of the competition window indicated by the competition window size field. Thus, the user device 410 may perform contention-based ranging with other user devices.

As an embodiment, the response message may include information for identifying the user device 410 (e.g., the name or ID of the user device (mobile device)).

As an embodiment, the response message may be a ranging response message (UWB message/RFRAME) specified in the "IEEE 802.15.4z standard" and the "UWB MAC standard of the FiRa consortium". For example, the initiation message may be a ranging response message (SP1 RFRAME) corresponding to the ranging initiation message (SP1 RFRAME) configured when a ranging frame (RFRAME) configuration is set as scrambled timestamp sequence (STS) packet configuration structure 1 (SP1). In this case, the response message may include at least one piece of information used for UWB ranging (e.g., response time information indicating the time from reception of the initiation message to transmission of the response message thereto and/or transmission timestamp indicating the transmission time of the response message).

As an embodiment, the response message (SP1 response message/SP1 ranging response message) having the SP1 configuration may include a MAC header, a MAC payload including at least one payload information element (IE), and/or a MAC footer,

As an embodiment, the response message may include a header information element (IE) and/or a payload IE. Table 3 and Table 4 below show an example of the payload information element (IE) of the response message.

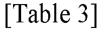

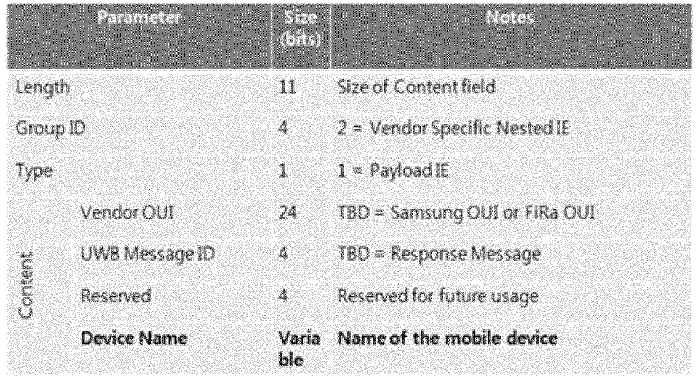

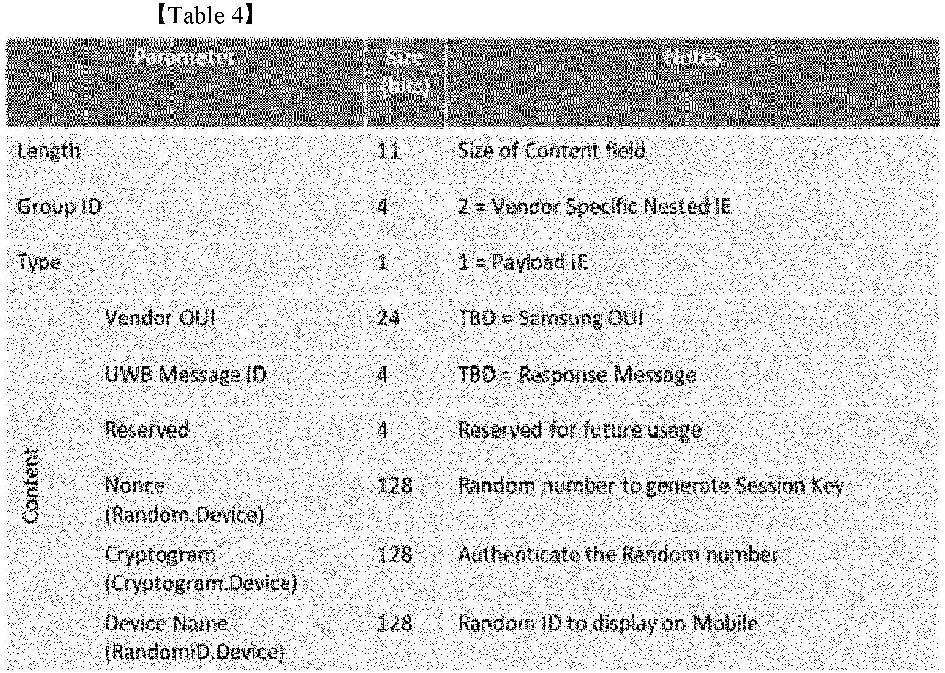

Referring to Tables 3 and 4, the response message may include a payload IE including a length field (information), a group ID field (information), a type field (information), and/or a content field (information). As an embodiment, the content field may include a vendor OUI field, a UWB message ID field, and a device name field (information). In the disclosure, the device name field may be referred to as RandomID.Device.

The definitions and descriptions of the length field, group ID field, type field, vendor OUI field, and UWB message ID field of the response message in Tables 3 and 4 may be made to the definitions and descriptions of the length field, group ID field, type field, vendor OUI field, and UWB message ID field of the initiation message of Table 1. Meanwhile, the UWB message ID field of Tables 3 and 4 may be set to a value indicating the response message.

The response message of Tables 3 and 4 includes a device name field in the content field. The device name field indicates the name of the user device. For example, as shown in Table 3, the device name field may be set to a value indicating the name of the user's mobile device. For example, as in Table 4, the name of the mobile device may be a random ID for the mobile device. Through the device name field, the payment device 420 may identify the user device 410 that has sent the response message.

Referring to Table 4, the response message (or content field) may further include a nonce field (Random.Device) and/or a Cryptogram field (Cryptogram.Device). The Nonce field may include a random number for generating a session key. The cryptogram field may include data for authenticating a random number.

As an embodiment, the payment device 420 may determine location information (e.g., a relative distance between the user device 410 and the payment device 420) about the user device identified based on the response message using a predetermined ranging method (e.g., SS-TWR or DS-TWR scheme) and provide a user device (user) list generated based on the location information. For example, the payment device 420 may calculate the range for each user device based on the response message to determine the location information and provide a list of user devices (users) sorted by distance based on the location information. In this case, among the user devices (users), only user devices (users) within a predetermined distance from the payment device 420 may be included in the user device (user) list. One user device may be selected from among the user devices in the so-provided list. For example, according to a predetermined scheme, the user device 410 of FIG. 4 may be selected as the user device having payment intention.

### <Operation 4030 and transaction information message>

The payment device 420 may transmit a transaction information message for payment (e.g., offline payment) to the selected user device 410 (4030). As an embodiment, the payment device 420 may transmit the transaction information message through an in-band or out-of-band connection. In other words, the payment device 420 may transmit the transaction information message through UWB communication/session (in-band communication/session) or non-UWB communication/session (out-of-band communication/session).

As an embodiment, the transaction information message may be a UWB message specified in the "UWB MAC standard of FiRa consortium".

In an embodiment, the transaction information message may include transaction information for offline payment. The transaction information may include information about, e.g., amount (currency, price, or tax), merchant name, merchant ID, order number, payment protocol, shipping address, address for payment sheet, allowed card brand, and/or recurring. As such, a case in which the transaction information message includes complete transaction information may be referred to as a "fully implemented transaction". Table 5 below shows an example of transaction information included in the transaction information message in the fully implemented transaction case.

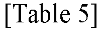

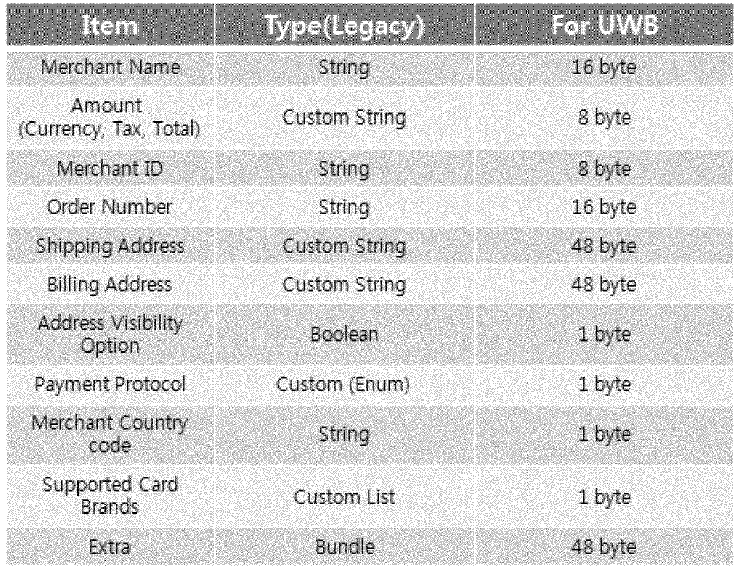

Referring to Table 5, the transaction information may include information about the merchant name, amount (currency, price, or tax), merchant ID, order number, shipping address, billing address, address visibility options, payment protocol, merchant country code, and/or supported card brands.

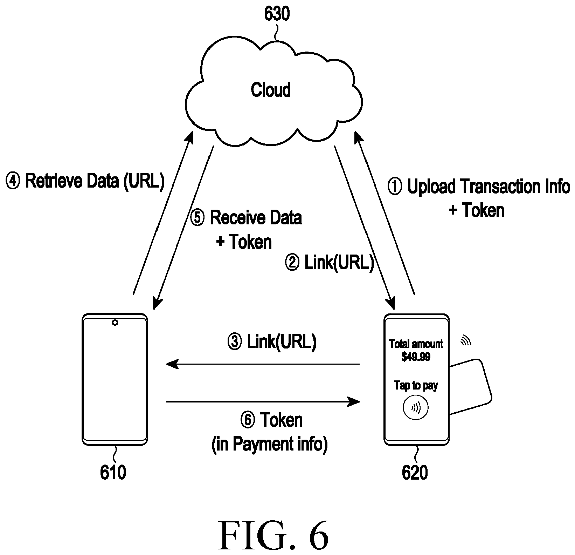

In another embodiment, the transaction information message may include link information (e.g., uniform resource locator (URL)) for obtaining the transaction information. As such, a case in which the transaction information message includes link information for obtaining the transaction information instead of complete transaction information may be referred to as a "simplified transaction". In the case of performing a simplified transaction, transmission overhead may be reduced because only minimum information for payment may be transmitted through UWB communication. An example of the simplified transaction case is described below with reference to FIGS. 6 and 7.

Table 6 below shows an example of link information included in the transaction information message in the simplified transaction case.

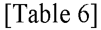

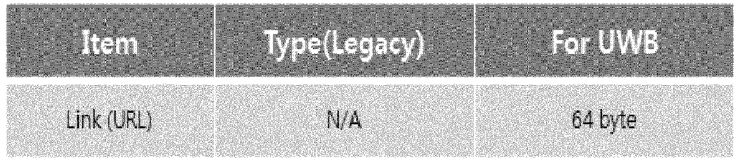

As an embodiment, the transaction information message may include a header IE and/or a payload IE. Tables 7 and 8 below show an example of the payload IE of the transaction information message. The transaction information message including the payload IE of Tables 7 and 8 below may be, e.g., a transaction information message used in the fully implemented transaction case.

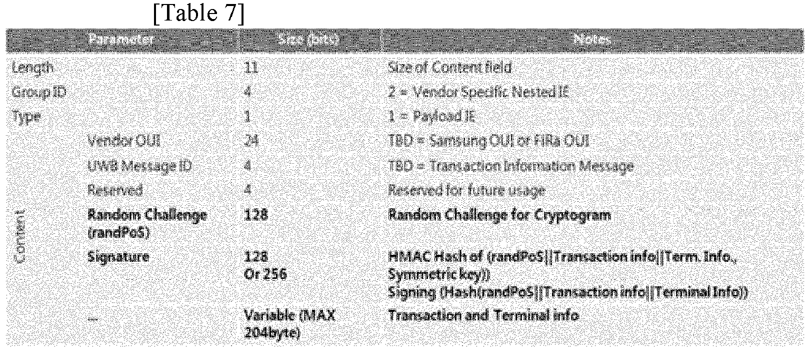

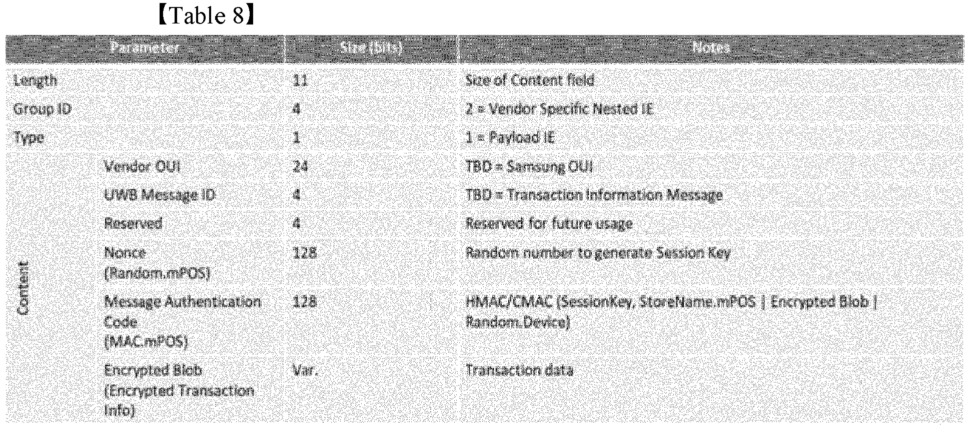

Referring to Tables 7 and 8, the transaction information message may include a payload IE including a length field (information), a group ID field (information), a type field (information), and/or a content field (information).

As an embodiment, as in Table 7, the content field may include a vendor OUI field, a UWB message ID field, a random challenge field (information) (randPoS), a signature field, and/or a transaction information field. In another embodiment, as shown in Table 8, the content field may include a vendor OUI field, a UWB message ID field, a nonce field (Random.mPOS), a message authentication code field (MAC.mPOS), and/or an encrypted blob field (Encrypted Transaction info).

The random challenge field, signature field, and transaction information field of Table 7 may be fields used to provide the same or similar functions as the nonce field, message authentication code field, and encrypted blob field, respectively, of Table 8. randPos in Table 7 may correspond to Random.mPoS in Table 8. randomPoS in Table 7 may correspond to StoreName.mPOS in Table 8. The terminal information (Terminal Info/Term.Info.) in Table 7 may correspond to Random.Device in Table 8.

The definitions and descriptions of the length field, group ID field, type field, vendor OUI field, and UWB message ID field of the transaction information message in Tables 7 and 8 may be made to the definitions and descriptions of the length field, group ID field, type field, vendor OUI field, and UWB message ID field of the initiation message of Table 1. Meanwhile, the UWB message ID field of Tables 7 and 8 may be set to a value indicating the transaction information message.

The random challenge field of Table 7 indicates a random challenge (random number) for encryption (cryptogram) of the transaction information message. For example, the random challenge field may be set to a value indicating a random challenge (randPoS) used to encrypt transaction information and/or terminal information included in the transaction information field. For example, the random challenge (randPoS) of Table 7 may correspond to a random number (Random.mPOS) for generating the session key included in the nonce field of Table 8. In the disclosure, the random challenge may be referred to as a first random number, a first random challenge, randPos, or Random.mPoS.

The signature field of Table 7 may include message authentication code (MAC) information and/or signing information for the transaction information message. The message authentication code information may be, e.g., a hash/cipher-based message authentication code (hash-based MAC (HMAC)/cipher-based MAC (CMAC)), as in the message authentication code of Table 8, or a hash-based message authentication code as in the signature field of Table 7.

As an embodiment, the hash-based message authentication code (HMAC) may be a value generated based on the transaction information and/or terminal information (Random.Device) included in the transaction information field (encrypted blob field) or randPos (Random.mPoS), and symmetric key, using a predetermined hash algorithm. For example, the hash-based message authentication code may be a hash value (e.g., HMAC Hash of (randPoS I I Transaction info∥Term. Info., Symmetric key) of Table 7) generated using, as input values to a predefined HMAC function, the value obtained by concatenating the randPos/Random.mPoS, transaction information, and terminal information (Random.Device) and the symmetric key value. HMAC Hash of (randPoS I I Transaction info∥Term. Info., Symmetric key) of Table 7 may correspond to HMAC(Symmetric key, StoreName.mPOS | Encypted Blob | Random.Device) of Table 8.

As an embodiment, the cipher-based message authentication code (CMAC) may be a value generated based on the transaction information and/or terminal information (Random.Device) included in the transaction information field (encrypted blob field) or randPos/Random.mPoS, and symmetric key, using a predetermined cipher algorithm. For example, the cipher-based message authentication code may be a value (e.g., CMAC(Symmetric key, StoreName.mPOS | Encypted Blob | Random.Device) of Table 8) generated using, as input values to a predefined CMAC function, the value obtained by concatenating the randPos/Random.mPoS, transaction information, and terminal information (Random.Device) and the symmetric key value.

As an embodiment, the value of the terminal information (Random.Device) may be the value included in the nonce field of Table 4, for example.

As an embodiment, the signing information may be a value generated based on the hash value generated based on the transaction information and/or terminal information (Random.Device) included in the transaction information field (encrypted blob field) and randoPos/Random.mPoS using a predefined signing algorithm. For example, the signing information may be a value (e.g., Signing (Hash(randPoS I I Transaction info∥Terminal Info)) of Table 7) generated by applying a signing function to the hash value generated by applying a hash function to the value obtained by concatenating the randPos/Random.mPoS, transaction information and terminal information (Random.Device).

### <Operation 4040 and payment information message>

The user device 410 may transmit a payment information message corresponding to the transaction information message to the payment device 420 (4040).

As an embodiment, the payment information message may be a UWB message specified in the "UWB MAC standard of FiRa consortium".

In an embodiment, the payment information message may include payment information (e.g., card information) for offline payment. The payment information message may include, e.g., card number, expiration date, authentication service (auth service), purchased total currency, amount, billing information (info), and/or token. As such, a case in which the payment information message includes complete payment information may be referred to as a "fully implemented payment". Table 9 below shows an example of transaction information included in the payment information message in the fully implemented payment case.

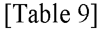

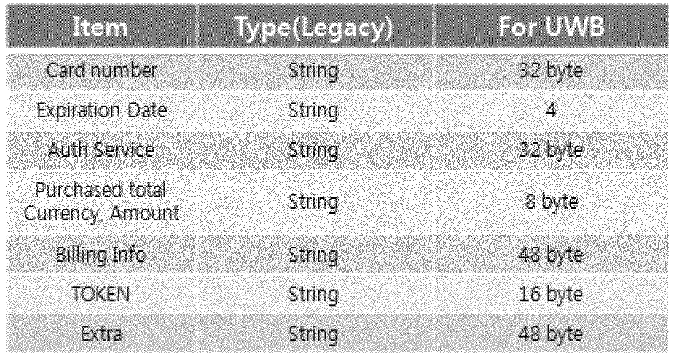

Referring to Table 9, the payment information message may include, e.g., card number, expiration date, authentication service (auth service), purchased total currency, amount, billing information (info), and/or token.

In another embodiment, the payment information message may include link information (e.g., uniform resource locator (URL)) for obtaining the payment information. As such, a case in which the payment information message includes link information for obtaining the payment information instead of complete payment information may be referred to as a "simplified payment". In the case of performing a simplified payment, transmission overhead may be reduced because only minimum information for payment may be transmitted through UWB communication. An example of the simplified payment case is described below with reference to FIG. 7.

Table 10 below shows an example of link information included in the payment information message in the simplified transaction case.

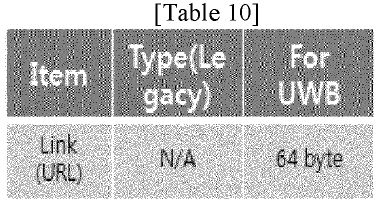

As an embodiment, the payment information message may include a header IE and/or a payload IE. Tables 11 and 12 below show an example of the payload IE of the payment information message. The payment information message including the payload IE of Tables 11 and 12 below may be, e.g., a payment information message used in the fully implemented payment case.

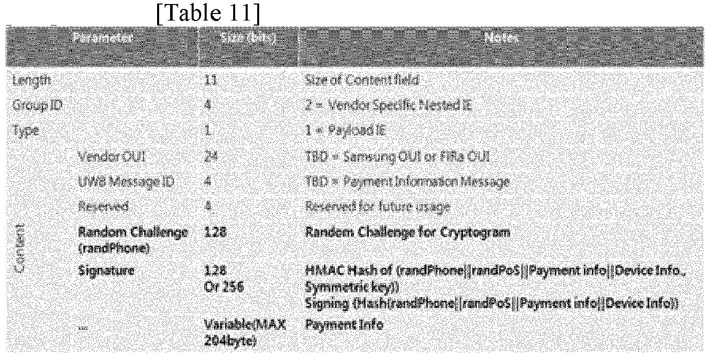

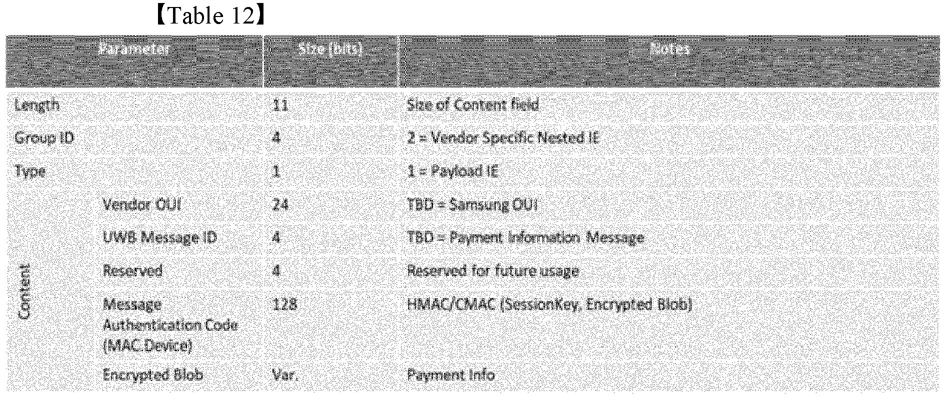

Referring to Tables 11 and 12, the payment information message may include a payload IE including a length field (information), a group ID field (information), a type field (information), and/or a content field (information).

As an embodiment, as in Table 11, the content field may include a vendor OUI field, a UWB message ID field, a random challenge field (information) (randPhone), a signature field, and/or a payment information field. In another embodiment, as shown in Table 12, the content field may include a vendor OUI field, a UWB message ID field, a message authentication code field (MAC.DEVICE), and/or an encrypted blob field. The signature field and payment field of Table 11 may be fields used to provide the same or similar functions as the message authentication code field, and encrypted blob field, respectively, of Table 12.

The definitions and descriptions of the length field, group ID field, type field, vendor OUI field, and UWB message ID field of the payment information message in Tables 11 and 12 may be made to the definitions and descriptions of the length field, group ID field, type field, vendor OUI field, and UWB message ID field of the initiation message of Table 1. Meanwhile, the UWB message ID field of Tables 11 and 12 may be set to a value indicating the payment information message.

The random challenge field of Table 11 indicates a random challenge (random number) for encryption (cryptogram) of the payment information message. For example, the random challenge field may be set to a value indicating a random challenge used to encrypt payment information included in the payment information field. The random challenge of Table 8 may be referred to as a second random number, a second random challenge, randPhone, or Random.Device.

The signature field of Table 11 may include message authentication code information and/or signing information for the payment information message. The message authentication code information may be, e.g., a hash/cipher-based message authentication code (hash-based MAC (HMAC)/cipher-based MAC (CMAC)), as in the message authentication code of Table 12, or a hash-based message authentication code as in the signature field of Table 11.

In an embodiment, as in Table 11, the hash-based message authentication code may be a value generated based on the symmetric key, device information (device info), and payment information included in the payment information field (encrypted blob field), randPhone/Random.Device, and/or randPos/Random.mPoS, using a predetermined hash algorithm. For example, as in Table 11, the hash-based message authentication code may be a hash value (e.g., HMAC Hash of (randPhone∥randPoS∥Payment info∥device Info, Symmetric key))) generated using, as input values to a predefined HMAC function, the value obtained by concatenating the randPhone/Random.Device, randPos/Random.mPoS, payment information, and device information (device info) and the symmetric key. As another example, as in Table 12, the hash-based message authentication code may be a hash value (e.g., HMAC (symmetric key, encrypted blob)) generated using, as input values to a predefined HMAC function, the payment information included in the encrypted blob field and the symmetric key value.

As an embodiment, the cipher-based message authentication code may be a value (e.g., HMAC (symmetric key, encrypted blob)) generated using, as input values to a predefined CMAC function, the payment information included in the encrypted blob value and the symmetric key value.

As an embodiment, the value of the Random.Device may be the value included in the nonce field of Table 4, for example.

As an embodiment, the signing information may be a value generated based on a hash value generated based on the device information and/or payment information included in the payment information field, randPos/Random.mPoS, and randPhone/Random.Device, using a predefined signing algorithm. For example, the signing information may be a value (e.g., Signing (Hash(randPhone∥randPoS∥Payment info∥Device Info))) generated by applying a signing function to the hash value generated by applying a hash function to the value obtained by concatenating the randPhone/Random.Device, randPos/Random.mPoS, payment information, and terminal information.

The device information (device info) of Table 11 may include information and/or a secret value for identifying, e.g., the user device. As an embodiment, the device information may be included in the header of the MAC frame including the payment information message.

The payment information field may include payment information. As an embodiment, the payment information may include card information, such as card number (e.g., primary account number).

The payment device receiving the payment information message may complete the payment procedure based on the information included in the payment information message. Meanwhile, the payment processing procedure between the payment device and the backend components (acquirer or issuer devices) follows a known procedure, and a detailed description thereof is omitted.

The initiation message, response message, transaction information message, and/or payment information message described above in connection with FIG. 4 may correspond to the MAC frame defined in, e.g., the "IEEE 802.15.4/z standard" or "FiRa consortium UWB MAC technical standard" or messages included in the payload of the MAC frame. In this case, the structure of the header of the MAC frame may be as shown in Table 13 below.

**Table 13**

| | |
|---|---|
| Octets: 2 | 2 |
| Frame Control | Source Address |
| MAC header | |

Referring to Table 13, the MAC frame header (MAC header) may include a frame control field and a source address field. An example of the frame control field may be shown in Table 14 below.

**Table 14]**

| **Field** | Size (bits) | Notes |
|---|---|---|
| Frame Type | 3 | 0b001: Data |
| Security Enabled | 1 | 0b0: Auxiliary Security Header is not present0b1: Auxiliary Security Header is present |
| Frame Pending | 1 | 0b0: No pending frame for the recipient0b1: More frame will be followed for the recipient |
| AR | 1 | 0b0: No ACK frame is required |
| PAN ID Compression | 1 | 1: Destination PAN ID field and Source PAN ID field are not present |
| Reserved | 1 | N/A |
| Sequence Number Suppression | 1 | 0b1: Sequence number field is not present |
| IE Present | 1 | 0b1: Header IE and/or Payload IE are contained in the frame |
| Destination Addressing Mode | 2 | 0b00: Destination address field is not present |
| Frame Version | 2 | 0b10: IEEE Std 802.15.4 |
| Source Addressing Mode | 2 | 0b10: Source address field contains short address |

FIG. 5 illustrates an example payment scenario using the payment method using UWB of FIG. 4. In the embodiment of FIG. 5, those described above with reference to the embodiment of FIG. 4 are not described. The user device 510 and payment device 520 of FIG. 5 may correspond to the user device 410 and payment device 520 of FIG. 4.

Referring to FIG. 5, the payment device 520 may transmit an initiation message for UWB ranging (5010). For example, the payment device 520 may broadcast an initiation message without encryption, at a predetermined period using an unencrypted broadcast scheme. As an embodiment, the initiation message may include information (e.g., store name (e.g., Starbucks)) for identifying the store associated with the payment device.

The user device 510 may provide information regarding the store to the user based on the information included in the initiation message. For example, as shown in FIG. 5, the user device 520 may provide a message, e.g., "You (John) are in Starbucks," to the user.

The user device 510 may transmit a response message to the initiation message to the payment device 520 (5020). For example, the user device 510 may encrypt a response message and unicast it to the payment device 520 using an encrypted unicast scheme. As an embodiment, the response message may include information for identifying the user device (e.g., the name or ID of the user device (mobile device)).

The payment device 520 may determine position information (e.g., relative distance between the user device and the payment device) about the user device 510 and provide a store clock with a user device (user) list generated based on the position information. For example, upon receiving a response message from the user device of each of John, Lucy, and Tim as shown in FIG. 5, the payment device 520 may determine position information by calculating the range (distance) to each user device according to a predefined UWB ranging scheme based on the response message and provide the store clerk with a user list, such as "[Client list] 1 John 2.Lucy 3.Tim", sorted by distance based on the position information. In this case, the store clerk may identify the user list, identify the user positioned at the shortest distance, and perform a procedure for taking an order from the user (the [Take order] of FIG. 5). The order procedure may be a procedure performed face-to-face offline as shown in FIG. 5 but, without limitations thereto, be a procedure performed online non-face-to-face.

The payment device 520 may transmit a transaction information message for offline payment to the selected user device 510 (5030). For example, the payment device 520 may encrypt the response message using an encrypted unicast scheme and unicast it to the selected user device. To that end, as shown in FIG. 5, the payment device 520 may provide the store clerk with a message, such as "Sends transaction info." The selected user device 510 may be the user device of the user for whom the above-described order procedure has been completed. As an embodiment, the transaction information message may include transaction information or link information for obtaining transaction information.

The user device 510 may provide the user with information for payment, based on the information included in the transaction information message. For example, the user device 510 may provide the user with a message, such as "Americano costs $3, Select your card, Auth!" based on the transaction information. Thus, the user may identify the provided message and perform an authentication procedure (e.g., fingerprint authentication).

The user device 510 may transmit a payment information message for offline payment to the payment device 520 (5040). For example, the user device 510 may encrypt the payment information message using an encrypted unicast scheme and unicast it to the payment device 520. To that end, as shown in FIG. 5, the user device 510 may provide a message, such as "Sends payment info." to the user. As an embodiment, the payment information message may include payment information or link information for obtaining payment information.

The payment device 520 may process a payment procedure based on the information included in the payment information message.

FIG. 6 illustrates a payment method using UWB according to another embodiment of the disclosure.

Specifically, the embodiment of FIG. 6 represents an example of a simplified transaction case of transmitting link information for obtaining transaction information in a UWB session instead of transmitting complete transaction information for offline payment in the UWB session.

In the embodiment of FIG. 6, it is assumed that a cloud device 630 plays a role as an intermediary between a payment device 620 and a user device 610. As an embodiment, the cloud device 630 may be, e.g., a device operated by a payment device for online payment, such as a payment gateway, but is not limited thereto. Further, in the embodiment of FIG. 6, it is assumed that the above-described UWB ranging procedure and the selection of the user device 610 for payment have already been completed.

Referring to FIG. 6, in operation 1, the payment device 620 may transmit transaction information, to be uploaded, to the cloud device 630. In this case, a token (e.g., one-time token) may be transmitted together with the transaction information. As an embodiment, the transaction information may be the transaction information described above in connection with Table 5. Table 15 below shows an example data structure including the transaction information.

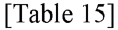

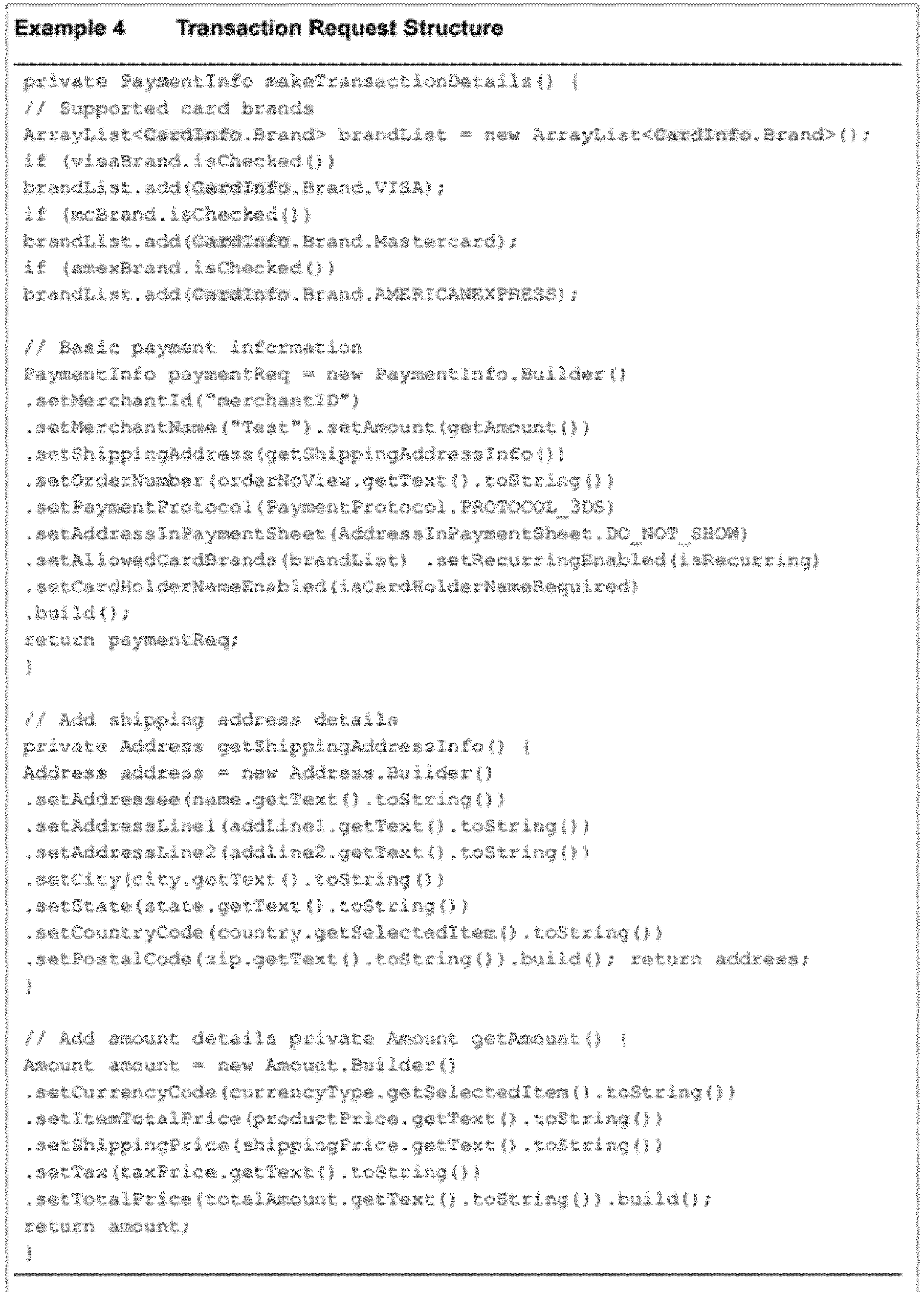

In operation 2, the cloud device 630 may store the received transaction information and token and may generate link information (e.g., a URL) used to obtain transaction information and transmit it to the payment device 620. Thus, the payment device 620 may receive the link information used to obtain transaction information from the cloud device 630.

In operation 3, the payment device 620 may include the received link information in a transaction information message and transmit it to the user device 610 through UWB communication. As an embodiment, the link information included in the transaction information message may be the link information described above with reference to Table 6.

In operation 4, the user device 610 may transmit a request for retrieving transaction information to the cloud device 630 using the received link information.

In operation 5, the cloud device 630 may retrieve stored transaction information based on the link information and may transmit data including transaction information and token to the user device 610. Thus, the user device 610 may receive the data including transaction information and token from the cloud device 630.

In operation 6, the user device 610 may include the received token in a payment information message and transmit it to the payment device 620 through UWB communication. As an embodiment, the payment information message may be a payment information message including a payload IE described above with reference to Tables 11 and 12.

FIG. 7 illustrates a payment method using UWB according to another embodiment of the disclosure.

Specifically, the embodiment of FIG. 7 represents examples of 1) a simplified transaction case of transmitting link information for obtaining transaction information in a UWB session instead of transmitting complete transaction information for offline payment in a UWB session and 2) a simplified payment case of transmitting link information for obtaining payment information in a UWB session instead of transmitting complete payment information in a UWB session.

In the embodiment of FIG. 7, it is assumed that a cloud device 730 plays a role as an intermediary between a payment device 720 and a user device 710. As an embodiment, the cloud device 730 may be, e.g., a device operated by a payment device for online payment, such as a payment gateway, but is not limited thereto. Further, in the embodiment of FIG. 7, it is assumed that the above-described UWB ranging procedure and the selection of the user device 710 for payment have already been completed.

Referring to FIG. 7, in operation 1, the payment device 720 may transmit transaction information, to be uploaded, to the cloud device 730. In this case, a token (Token_ti) may be transmitted together with the transaction information.

In operation 2, the cloud device 730 may store the received transaction information and token and may generate link information (e.g., a URL) used to obtain transaction information and transmit it to the payment device 720. Thus, the payment device 720 may receive the link information used to obtain transaction information from the cloud device 730.

In operation 3, the payment device 720 may include the received link information in a transaction information message and transmit it to the user device 710 through UWB communication. As an embodiment, the link information included in the transaction information message may be the link information described above with reference to Table 6.

In operation 4, the user device 710 may transmit a request for retrieving transaction information to the cloud device 730 using the received link information.

In operation 5, the cloud device 730 may retrieve stored transaction information based on the link information and may transmit data including transaction information and token to the user device 710. Thus, the user device 710 may obtain the data including transaction information and token from the cloud device 730.

In operation 6, the user device 710 may transmit payment information to be uploaded to the cloud device 730. In this case, in operation 7, the cloud device 730 may store the received payment information, generate link information (e.g., URL) used to obtain payment information and transmit it to the user device 710. As an embodiment, the payment information may be the payment information described above with reference to Table 9. Table 16 below shows an example data structure including the payment information.

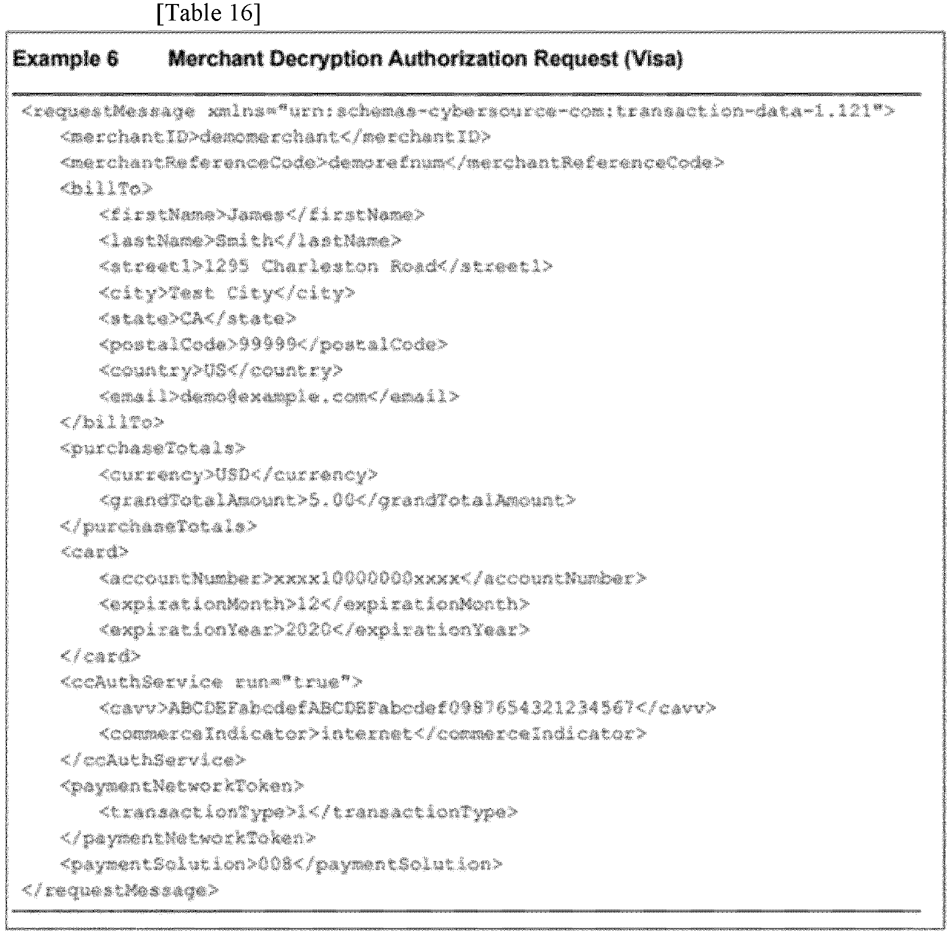

In operation 8, the user device 710 may include the received link information in a payment information message and transmit it to the payment device 720 through UWB communication. As an embodiment, the link information included in the payment information message may be the link information described above with reference to Table 10.

In operation 9, the user device 720 may transmit a request for retrieving payment information to the cloud device 730 using the received link information.

In operation 10, the cloud device 730 may retrieve stored payment information based on the link information and may transmit data including payment information to the payment device 720. Thus, the payment device 720 may receive data including payment information from the cloud device 730.

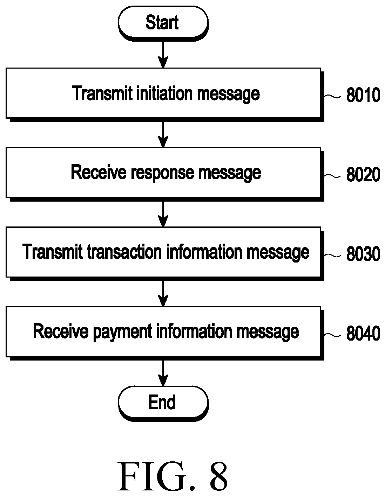

FIG. 8 illustrates a method for processing payment using UWB by a payment device according to an embodiment of the disclosure.

In the embodiment of FIG. 8, those described above with reference to FIGS. 2 to 7 are not described. For example, the description of the initiation message, response message, transaction information message, payment information message, and information included in each message described above in connection with FIGS. 2 to 7 may be applied to the initiation message, response message, transaction information message, payment information message, and information included in each message to be described with reference to FIG. 8, and no duplicate description is thus given below.

In the embodiment of FIG. 8, an STS configuration for UWB (UWB communication or session) may correspond to a static STS configuration, and the value of the static STS for the static STS configuration may be generated based on the value of the vendor ID. Further, in the embodiment of FIG. 8, the ranging frame configuration for UWB communication may correspond to STS packet (SP) 1 configuration. Further, in the embodiment of FIG. 8, the ranging mode (scheduled mode) of UWB ranging may be a contention-based ranging mode.

Referring to FIG. 8, the payment device may transmit an initiation message for initiating UWB ranging (8010). For example, the payment device may broadcast the initiation message.

As an embodiment, the initiation message may be an SP1 ranging initiation message (SP1 RFRAME).

As an embodiment, the initiation message may include information for identifying the payment device or the store associated with the payment device (e.g., name of the store) and/or information related to a contention window associated with contention-based ranging mode UWB ranging (e.g., contention window size and/or information indicating the presence of the contention window).

The payment device may receive a response message to the initiation message from at least one user device (8020).

As an embodiment, the response message may be an SP1 ranging response message (SP1 RFRAME).

As an embodiment, the response message may include information for identifying the user device (e.g., the name or ID of the user device (mobile device)). In this case, position information about at least one user terminal may be determined based on the response message received from at least one user terminal. For example, the payment device may calculate the range (distance) for each user device using a preset UWB ranging scheme based on the response message received from at least one user terminal and determine the position information (e.g., relative distance between the payment device and the corresponding user device). Further, a user device (user) list may be generated based on the position information. For example, the payment device may generate a user device (user) list that enumerates the user devices (users) in order of distance based on the position information.

The payment device may transmit a transaction information message for payment (e.g., offline payment) to the user device selected based on the response message (8030). For example, the payment device may select one user device included in the generated user device list according to a predetermined criterion. Thus, a user device with payment intent may be selected.

As an embodiment, the payment device may transmit the transaction information message through an in-band or out-of-band connection.

In an embodiment, the transaction information message may include transaction information for offline payment. The transaction information may include information about, e.g., amount (currency, price, or tax), merchant name, merchant ID, order number, payment protocol, shipping address, address for payment sheet, allowed card brand, and/or recurring.

In another embodiment, the transaction information message may include link information (e.g., uniform resource locator (URL)) for obtaining the transaction information. In this case, transmission overhead may be reduced because only minimum information for payment may be transmitted through UWB communication.

As an embodiment, the transaction information message may include a first random number for encrypting the transaction information message and first signing information generated based on the transaction information and the first random number.

As an embodiment, the transaction information message may have an SP1 RFRAME configuration.

The payment device may receive the payment information message corresponding to the transaction information message from the user device (8040).

In an embodiment, the payment information message may include payment information (e.g., card information) for offline payment. The payment information message may include, e.g., card number, expiration date, authentication service (auth service), purchased total currency, amount, billing information (info), and/or token.

In another embodiment, the payment information message may include link information (e.g., uniform resource locator (URL)) for obtaining the payment information. In this case, transmission overhead may be reduced because only minimum information for payment may be transmitted through UWB communication.

As an embodiment, the payment information message may further include a second random number for encrypting the payment information message, and second signing information generated based on the payment information, first random number, and second random number.

As an embodiment, the payment information message may have an SP1 RFRAME configuration.

The payment device receiving the payment information message may complete the payment procedure based on the information included in the payment information message.

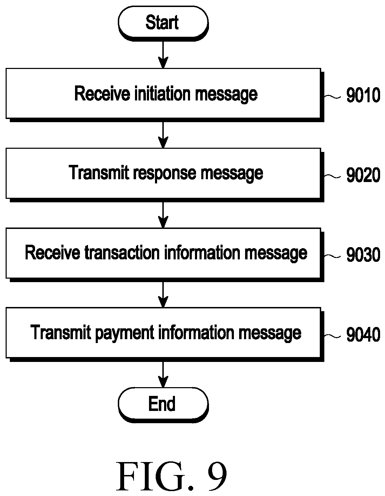

FIG. 9 illustrates a method for processing payment using UWB by a user device according to an embodiment of the disclosure.

In the embodiment of FIG. 9, those described above with reference to FIGS. 2 to 8 are not described. For example, the description of the initiation message, response message, transaction information message, payment information message, and information included in each message described above in connection with FIGS. 2 to 8 may be applied to the initiation message, response message, transaction information message, payment information message, and information included in each message to be described with reference to FIG. 9, and no duplicate description is thus given below.

In the embodiment of FIG. 9, an STS configuration for UWB (UWB communication) may correspond to a static STS configuration, and the value of the static STS for the static STS configuration may be generated based on the value of the vendor ID. Further, in the embodiment of FIG. 9, the ranging frame configuration for UWB communication may correspond to STS packet (SP) 1 configuration. Further, in the embodiment of FIG. 9, the ranging mode (scheduled mode) of UWB ranging may be a contention-based ranging mode.

Referring to FIG. 9, the user device may receive the initiation message for initiating UWB ranging (9010).

As an embodiment, the initiation message may be an SP1 ranging initiation message (SP1 RFRAME).

As an embodiment, the initiation message may include information for identifying the payment device or the store associated with the payment device (e.g., name of the store) and/or information related to a contention window associated with contention-based ranging mode UWB ranging (e.g., contention window size and/or information indicating the presence of the contention window).

The user device may transmit a response message to the initiation message to the payment device (9020).

As an embodiment, the response message may be an SP1 ranging response message (SP1 RFRAME).

As an embodiment, the response message may include information for identifying the user device (e.g., the name or ID of the user device (mobile device)). In this case, position information about the user terminal may be determined based on the response message received from the user terminal. For example, the payment device may calculate the range (distance) for the user device using a preset UWB ranging scheme based on the response message received from the user terminal and determine the position information (e.g., relative distance between the payment device and the corresponding user device). Further, a user device (user) list may be generated based on the position information. For example, the payment device may generate a user device (user) list that enumerates the user devices (users) having response messages in order of distance based on the position information. Thus, a user device with payment intent may be selected.

The user device may receive a transaction information message for offline payment from the payment device (8030). For example, the user device receiving the transaction information message may be the user device selected from the user device list according to a predetermined criterion. As an embodiment, the user device may perform authentication for payment based on the transaction information message.

In an embodiment, the transaction information message may include transaction information for offline payment. The transaction information may include information about, e.g., amount (currency, price, or tax), merchant name, merchant ID, order number, payment protocol, shipping address, address for payment sheet, allowed card brand, and/or recurring.

In another embodiment, the transaction information message may include link information (e.g., uniform resource locator (URL)) for obtaining the transaction information. In this case, transmission overhead may be reduced because only minimum information for payment may be transmitted through UWB communication.

As an embodiment, the transaction information message may include a first random number for encrypting the transaction information message and first signing information generated based on the transaction information and the first random number.

As an embodiment, the transaction information message may have an SP1 RFRAME configuration.

The user device may transmit a payment information message corresponding to the transaction information message to the payment device (8040).

In an embodiment, the payment information message may include payment information (e.g., card information) for offline payment. The payment information may include, e.g., card number, expiration date, authentication service (auth service), purchased total currency, amount, billing information (info), and/or token.

In another embodiment, the payment information message may include link information (e.g., uniform resource locator (URL)) for obtaining the payment information. In this case, transmission overhead may be reduced because only minimum information for payment may be transmitted through UWB communication.

As an embodiment, the payment information message may further include a second random number for encrypting the payment information message, and second signing information generated based on the payment information, first random number, and second random number.

As an embodiment, the payment information message may have an SP1 RFRAME configuration.

The payment device receiving the payment information message may complete the payment procedure based on the information included in the payment information message.

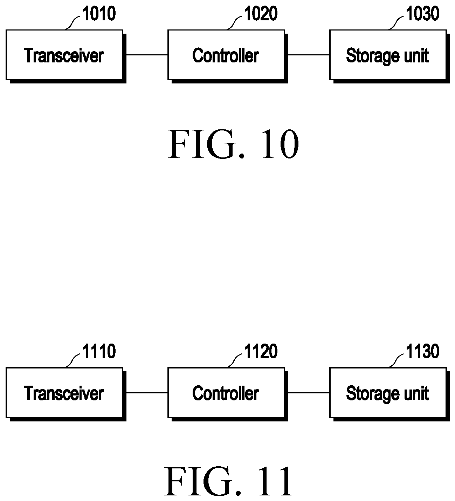

FIG. 10 is a view illustrating a structure of a payment device according to an embodiment of the disclosure.

In the disclosure, the payment device may be a UWB device (e.g., an enhanced ranging device (ERDEV) defined in IEEE 802.15.4z or FiRa device defined in FiRa) that provides a payment service through UWB communication.

Referring to FIG. 10, the payment device may include a transceiver 1010, a controller 1020, and a storage unit 1030. In the disclosure, the controller may be defined as a circuit or application-specific integrated circuit or at least one processor.

The transceiver 1010 may transmit and receive signals to/from other network entities. The transceiver 1010 may transmit/receive data for offline payment to/from a user device using, e.g., UWB communication.

The controller 1020 may control the overall operation of the payment device according to an embodiment. For example, the controller 1020 may control inter-block signal flow to perform the operations according to the above-described flowchart. Specifically, the controller 1020 may control the operations of the payment processing procedure of the payment device described above with reference to FIGS. 2 to 9.

The storage unit 1030 may store at least one of information transmitted/received via the transceiver 1010 and information generated via the controller 1020. For example, the storage unit 1030 may store information and data for payment processing using UWB described above with reference to FIGS. 2 to 9.

FIG. 11 is a view illustrating a structure of a user device according to an embodiment of the disclosure.

In the disclosure, the user device may be a UWB device (e.g., an enhanced ranging device (ERDEV) defined in IEEE 802.15.4z or FiRa device defined in FiRa) that provides a payment service through UWB communication.

Referring to FIG. 11, the payment device may include a transceiver 1110, a controller 1120, and a storage unit 1130. In the disclosure, the controller may be defined as a circuit or application-specific integrated circuit or at least one processor.

The transceiver 1110 may transmit and receive signals to/from other network entities. The transceiver 1110 may transmit/receive data for offline payment to/from a payment device using, e.g., UWB communication.

The controller 1120 may control the overall operation of the user device according to an embodiment. For example, the controller 1120 may control inter-block signal flow to perform the operations according to the above-described flowchart. Specifically, the controller 1120 may control the operations of the payment processing procedure of the user device described above with reference to FIGS. 2 to 9.

The storage unit 1130 may store at least one of information transmitted/received via the transceiver 1110 and information generated via the controller 1120. For example, the storage unit 1130 may store information and data for payment processing using UWB described above with reference to FIGS. 2 to 9.

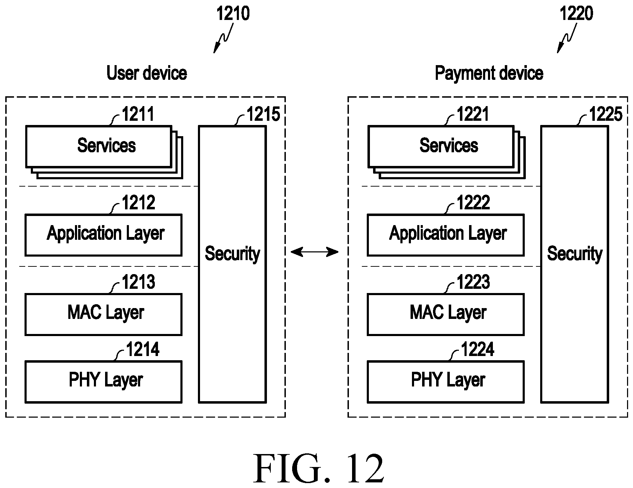

FIG. 12 illustrates an example architecture of a payment system using UWB according to an embodiment of the disclosure.

Referring to FIG. 12, the payment system may include a user device 1210 and a payment device 1220 capable of UWB communication. The user device 1210 and the payment device 1220 may perform the operation for payment (offline) described above in connection with FIGS. 2 to 9 using UWB communication.

The user device 1210 and the payment device 1220, respectively, may have protocol stacks including service layers 1211 and 1221, application layers 1212 and 1222, MAC layers 1213 and 1223, PHY layers 1214 and 1224, and security layers 1215 and 1222.

The MAC layers 1213 and 1223 and the PHY layers 1214 and 1224 may be UWB-based MAC layers (UWB MAC) and PHY layers (UWB PHY) for UWB communication and may follow, e.g., the content specified in the IEEE 802.15.4/z standard" or "FiRa consortium UWB MAC technical standard. Further, the MAC layers 1213 and 1223 and the PHY layers 1214 and 1224 may correspond to MAC layers and PHY layers for supporting a communication scheme other than UWB communication. For example, the MAC layers 1213 and 1223 and the PHY layers 1214 and 1224 may correspond to 5G communication- and/or Bluetooth-based MAC and PHY layers for supporting 5G communication and/or Bluetooth communication.

The service layers 1211 and 1221 may define characteristics for services including the payment service and location-based service of the disclosure. Further, the application layers 1212 and 1222 and the security layers 1215 and 1225 may specify a mechanism for discovering UWB devices and services, a mechanism for implementing devices in a mutually compatible manner, and mutually compatible security requirements, The service layers 1211 and 1221, the application layers 1212 and 1222, and the security layers 1215 and 1225 may follow, e.g., the content specified in the FiRa consortium technical standard.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present disclosure have been described above, various changes may be made thereto without departing from the scope of the present disclosure. Thus, the scope of the disclosure should not be limited to the above-described embodiments, and should rather be defined by the following claims and equivalents thereof.

## Claims

1. A method by a payment device providing a payment service using UWB communication, the method comprising:
transmitting an initiation message for initiating UWB ranging;
receiving a response message for the initiation message from at least one user device;
transmitting a transaction information message for payment to a first user device selected based on the response message; and
receiving a payment information message corresponding to the transaction information message from the first user device.

2. The method of claim 1, further comprising:
determining position information about the at least one user terminal based on the response message;
generating a user list for the at least one user terminal based on the position information; and
selecting the first user device having a payment intent based on the user list.

3. The method of claim 1, wherein the initiation message includes information for identifying the payment device or a store associated with the payment device and information related to a contention window for the UWB ranging in a contention-based ranging mode.

4. The method of claim 3, wherein the information related to the contention window includes flag information indicating whether contention window size information indicating duration of the contention window is present.

5. The method of claim 4, wherein when the flag information is set to a first value, the contention window size information is not present in the initiation message, and when the flag information is set to a second value, the contention window size information is present in the initiation message.

6. The method of claim 1, wherein the response message includes information for identifying a user device transmitting the response message.

7. The method of claim 1, wherein the transaction information message includes transaction information for the payment or link information for obtaining the transaction information and includes information about at least one of a transaction amount, a merchant name, a merchant ID, an order number, a payment protocol, a shipping address, an address for a payment sheet, an allowed card brand, or recurring.

8. The method of claim 7, wherein the transaction information message includes a first random number for encrypting the transaction information message and first signing information generated based on the transaction information and the first random number.

9. The method of claim 1, wherein the transaction information message includes payment information and link information for obtaining the payment information, and
wherein the payment information includes information about at least one of a card number, an expiration date, an authentication service (auth service), a purchased total currency, an amount, billing information (info), or a token.

10. The method of claim 9, wherein the payment information message further includes a second random number for encrypting the payment information message and second signing information generated based on the payment information, the first random number, and the second random number.

11. The method of claim 1, wherein a scrambled timestamp sequence (STS) configuration for the UWB communication corresponds to a static STS configuration,
wherein a value of a static STS for the static STS configuration is generated based on a value of a vendor ID,
wherein a ranging frame configuration for the UWB communication corresponds to an STS packet (SP) 1 configuration, and
wherein a ranging mode (scheduled mode) of the UWB ranging corresponds to a contention-based ranging mode.

12. A method by a user device providing a payment service using UWB communication, the method comprising:
receiving an initiation message for initiating UWB ranging from a payment device;
transmitting a response message for the initiation message to the payment device;
receiving a transaction information message for payment from the payment device; and
transmitting a payment information message corresponding to the transaction information message to the payment device.

13. The method of claim 12, further comprising performing authentication for payment based on the transaction information message.

14. A payment device providing a payment service using UWB communication, comprising:
a transceiver; and
a controller connected to the transceiver and configured to:
transmit an initiation message for initiating UWB ranging;
receive a response message to the initiation message from at least one user device;
transmit a transaction information message for payment to a first user device selected based on the response message; and
receive a payment information message corresponding to the transaction information message from the first user device.

15. A user device providing a payment service using UWB communication, comprising:
a transceiver; and
a controller connected to the transceiver and configured to:
receive an initiation message for initiating UWB ranging from a payment device;
transmit a response message to the initiation message to the payment device;
receive a transaction information message for payment from the payment device; and
transmit a payment information message corresponding to the transaction information message to the payment device.
